# EUROPÄISCHE PATENTANMELDUNG

(11) **EP 3 034 866 A1**
(43) Veröffentlichungstag der Anmeldung: **22.06.2016**
(21) Anmeldenummer: 15197431.8
(22) Anmeldetag: 02.12.2015
(51) Int. Cl.: F03D 5/06

(54) **WINDKRAFTANLAGE**

(30) Priorität: 15.12.2014 DE 102014118656
(71) Anmelder: Rohner, Ingo, 01936 Großnaundorf (DE)
(72) Erfinder: Rohner, Ingo, 01936 Großnaundorf (DE)
(74) Vertreter: Kaufmann, Sigfrid

(57) **Zusammenfassung**

Die Erfindung betrifft eine Windkraftanlage, aufweisend einen lotrecht verlaufenden Mast (1) mit einer drehbar daran angeordneten Tragfläche (2), wobei der Mast (1) an einer Position in seinem unteren Bereich um eine horizontale Drehachse (6) drehbar gelagert ist, ein Mastfußgestänge (3), das an seinem ersten Endbereich drehbar mit dem Mast (1) an einer Position unterhalb der Drehachse (6) verbunden ist und an seinem zweiten Endbereich in der Art mit einer im Wesentlichen waagrecht ausgerichteten Übertragungswelle (4) verbunden ist, dass eine translatorische Hin- und Herbewegung des Mastfußgestänges (3) in eine Drehbewegung der Übertragungswelle (4) um ihre Längsachse transformierbar ist, ein Schotgestänge (5), das an seinem ersten Endbereich drehbar mit der Tragfläche (2) in einem Bereich an der der ersten Längsseite gegenüberliegenden zweiten Längsseite der Tragfläche (2) und an seinem zweiten Endbereich in der Art mit der Übertragungswelle (4) verbunden ist, dass eine Drehbewegung der Übertragungswelle (4) um ihre Längsachse in eine translatorische Hin- und Herbewegung des Schotgestänges (5) transformierbar ist, wobei das Schotgestänge (5) und das Mastfußgestänge (3) in der Art mit der Übertragungswelle (4) verbunden sind, dass die jeweiligen translatorischen Hin- und Herbewegungen um einen vorgegebenen Phasenwinkel phasenversetzt sind.

## Beschreibung

Die Erfindung betrifft eine Vorrichtung, die die Energie des natürlichen Windes in nutzbare mechanische und/oder elektrische Energie umwandelt, wobei sich die vom Wind beaufschlagten Teile hin und her bewegen.

Windkraftanlagen bzw. Windkraftmaschinen sind in verschiedensten Ausgestaltungen bekannt. Für eine kommerzielle Nutzung werden überwiegend Windkraftmaschinen in Form von Windrädern, aufweisend einen Rotor mit Drehachse im Wesentlichen in Windrichtung, genutzt. Bauartbedingt können derartige Windkraftanlagen maximal 16/27 (knapp 60 Prozent) jener mechanischen Leistung, die der Wind ohne den bremsenden Rotor durch dessen Projektionsfläche transportieren würde, in Nutzleistung umwandeln (Betzsches Gesetz). Im Durchschnitt erreichen Rotoren mit horizontaler Drehachse lediglich einen Leistungsbeiwert c_{P} (Quotienten aus genutzter zu ankommender Windleistung) von 0,4 bis 0,5. Ein weiteres Problem bei derartigen Anlagen ist das Auftreten von kritischen Blattspitzen-Geschwindigkeiten, was höchste Anforderungen an Material und Konstruktion stellt.

Aus dem Stand der Technik sind Windkraftmaschinen bekannt, die aus der Windkraft ohne einen Rotor nutzbare Energie erzeugen. Beispielsweise beschreibt DE 101 18 407 B4 einen eine Auf- und Abwärtsbewegung ausführenden und für geringe Windgeschwindigkeiten optimierten Flügel in Leichtbauweise, der über ein Pleuelrohr und ein Schwungrad mit z. B. einem Generator verbunden ist, wobei eine Mechanik für die automatische Auf- und Abwärtsbewegung des Flügels an Führungen, ein drehbarer Rahmen für die Drehung des Flügels um eine vertikale Achse und Seitenflossen zur Drehung des Flügels in den Wind vorgesehen sind. Auch bei dieser Lösung wird nur ein kleiner Flächenbereich des Anlagenquerschnitts effektiv zur Windenergiegewinnung eingesetzt.

Vermittels Nutzung eines Segels kann effizienter eine Umwandlung von Windenergie in beispielsweise elektrische Energie erfolgen. Eine Windkraftmaschine mit einem Segel ist in DE 199 37 965 A1 offenbart. Hier ist ein senkrecht stehendes Segel bzw. aerodynamisches Profil um eine Vertikalachse drehbar an dem einen Ende einer Kurbel befestigt. An ihrem anderen Ende ist die Kurbel drehbar gelagert. Das aerodynamische Profil ist mit einem Gestänge im Wind fixiert. Durch den Wind erhält das aerodynamische Profil (seitlich wirkende) Auf- bzw. Abtriebskräfte, wodurch die Kurbel (zumindest um 180°) gedreht wird. Mittels des Gestänges wird das aerodynamische Profil nach einer 180°-Drehung der Kurbel derart gedreht, dass die Windkraft nun entgegengesetzt auf das Profil wirkt und die Kurbel weiter gedreht wird. Ein Schwingrad stellt die kontinuierliche Drehung sicher.

Auch sind Segel bekannt, die vor dem Wind über einen vorgegebenen Laufweg vorwärts bewegt werden und in umgeklappten, d. h. vom Wind nicht angreifbaren, Zustand denselben Laufweg wieder zurückgezogen werden. Eine nach diesem Prinzip arbeitende Windkraftmaschine ist z. B. aus DE 28 12 787 A1 bekannt.

Die DE 31 30 002 C2 beschreibt eine Vorrichtung zum Erzeugen einer nutzbaren Antriebsenergie aus der kinetischen Energie des Windes, bei der unter Verwendung eines vom Wind beaufschlagten aufgespannten Segels, welches zwischen zwei Aufspannpunkten in einer zur Windrichtung zumindest ungefähr parallelen Richtung schwingfähig gehalten ist. Am Segel greift mindestens ein Übertragungselement an, das die Schwingbewegungen (d. h. Killen) des Segels in eine hin-und hergehende translatorische Antriebsbewegung umsetzt.

Weiter ist aus der WO 98/12433 A1 eine Vorrichtung bekannt, die übereinander angeordnete Folien enthält, die mindestens zwei Bewegungsfreiheitsgrade haben und durch einen gerichteten Fluidstrom zum Flattern gebracht werden, wobei die dabei entstehende Oszillationsbewegung zur Energieerzeugung genutzt wird.

US 2008/0036214 A1 offenbart eine Windkraftanlage mit einem an einem lotrechten Mast befestigten Segel, wobei der Mast Schwingbewegungen um eine horizontale Achse ausführen kann. Durch böigen Wind wird das System zu einer (ungleichmäßigen) Schwingbewegung angeregt, die zur Stromerzeugung genutzt wird.

Eine ähnliche Windkraftanlage ist in US 2009/0224 553 A1 gezeigt. Hier wird ein drehbar gelagerter Mast vom Wind mittels drehbar gelagerter Windflügel in eine Schwingbewegung versetzt, wobei ein Mechanismus die Drehbewegung der Windflügel mit der Schwingbewegung des Mastes synchronisiert.

Eine Vorrichtung, die ungleichmäßigen Wind zur Energieerzeugung nutzt, ist in US 2013/0341 931 A1 beschrieben. Hier wird eine starre Platte jeweils von einzelnen Windstößen aus einer waagrechten Lage in eine senkrechte Lage gedreht, wobei die Platte bei Windflaute selbständig wieder zurückklappt.

DE 10 2009 036 789 A1 beschreibt eine Vorrichtung zur Gewinnung von Energie aus einer Fluidströmung, die eine Mehrzahl von in einem Rahmen jeweils um eine horizontale Achse drehbar gelagerten Lamellen umfasst, wobei der Rahmen Schwingbewegungen ausführen kann.

Solche Vorrichtungen mit flatternden Folien bzw. Segeln funktionieren nur über einer kritischen Geschwindigkeit des Fluidstromes, wobei die Schwingbewegungen von ihrer Natur her chaotisch sind. Weiterhin erzeugen derartige Windkraftanlagen auf Grund der permanenten Änderung der Anstellwinkel der Folien bzw. des Segels einen hohen Lärmpegel.

Aufgabe der Erfindung ist es, eine kosteneffektive und flexibel einsetzbare Windkraftanlage bereitzustellen, mittels welcher Windenergie effizient und kostengünstig zur Erzeugung von elektrischer und/oder mechanischer Energie nutzbar ist, wobei sich die Windkraftanlage durch eine - im Vergleich zu Windenergieanlagen mit Rotoren - verringerte Bauhöhe und dadurch bessere Integrationsmöglichkeiten in die Landschaft bzw. ein Ortsgebiet auszeichnen soll.

Die Lösung dieser Aufgabe erfolgt gemäß Patentanspruch 1; zweckmäßige Ausgestaltungen der Erfindung befinden sich in den Unteransprüchen.

Gemäß der Erfindung wird eine Windkraftanlage zum Erzeugen nutzbarer mechanischer und/oder elektrischer Energie bereitgestellt, wobei diese eine flächig ausgebildete, senkrecht stehende (aeroelastische) Tragfläche, z. B. ein Segel oder einen Flügel, aufweist, die um eine lotrechte Drehachse drehbar ist. Unter einer Tragfläche wird folglich jede Art von flächig ausgebildetem Gebilde mit aerodynamischen Eigenschaften verstanden.

Solch eine Tragfläche ist z. B. eine mit einem textilen Gebilde bespannte Stützstruktur, wie ein Segel, oder aus einem im Wesentlichen starren Material, wie ein Flügel. Das Segeltuch kann in Form eines gewebten, gewirkten oder nonwoven Textilgebildes vorliegen; der Flügel kann aus einem Metall, einem Kunststoff, einem Verbundwerkstoff oder einer Kombination dieser Werkstoffe bestehen.

Vorzugsweise ist die Tragfläche länglich ausgebildet, wobei die Ausdehnung in der Breite geringer ist als in der Höhe.

Die lotrechte Drehachse ist bevorzugt in Form eines Mastes ausgeführt, wobei der Mast bzw. die Drehachse ein von der Tragfläche getrennt ausgeführtes und mit diesem drehbar verbundenes Bauteil, oder aber integral mit der Tragfläche ausgebildet sein kann. Die Anbindung der Tragfläche an den Mast ist bevorzugt an einer (senkrecht angeordneten) Längsseite der Tragfläche.

Die Längenausdehnung des Mastes ist größer als die Längenausdehnung der Tragfläche, wobei der Mast zumindest im unteren Bereich über die Tragfläche hinausragt. Der Mast (d. h. die vertikale Drehachse) ist an einer Position unterhalb der Tragfläche zusätzlich um eine waagrechte Drehachse drehbar gelagert, sodass der Mast mit der Tragfläche (um diese waagrechte Drehachse) kippbar ist, d. h., Mast und Tragfläche können z. B. hingelegt und wieder aufgerichtet werden. Außerdem ist die Tragfläche an der dem Mast gegenüberliegenden Längsseite im unteren Bereich auf ihrer Luvseite mit einem länglichen, starren oder flexiblen Verbindungselement, im Folgenden als "Schotgestänge" bezeichnet, drehbar verbunden, wobei zumindest die beiden rotatorischen Freiheitsgrade, die in der Ebene der (flächig ausgebildeten) Tragfläche liegen, frei sind. Mittels dieses Schotgestänges ist eine Drehbewegung der Tragfläche um die vertikale Drehachse (d. h. eine Drehung um den Mast) regelbar.

Das Schotgestänge ist z. B. ein Seil, ein Band, ein Riemen, eine Kette oder eine Stange.

Die Windkraftanlage weist weiterhin einen Rückholmechanismus in Form einer Mastrückholvorrichtung auf, welcher derart ausgebildet ist, dass er den Mast aus einer Kipplage, d. h. wenn der Mast aufgrund einer Drehung um die waagrechte Drehachse aus seiner lotrechten Ausrichtung gekippt wurde, wieder in eine lotrechte Ausrichtung zurückdrehen kann.

Am unteren Ende des Mastes (d. h. dem Mastfuß) - unterhalb der Position der waagrechten Drehachse - ist an diesem ein im Wesentlichen horizontal verlaufendes Mastfußgestänge drehbar, beispielsweise mittels eines Kugelgelenks, befestigt, wobei mindestens der Rotationsfreiheitsgrad parallel zur horizontalen Drehachse des Mastes freigegeben ist.

Das Mastfußgestänge ist bevorzugt als Starrkörper in Balkenform (d. h. mit einer Längenausdehnung deutlich größer als die Querschnittsausdehnung) ausgebildet, beispielsweise in Form einer Aluminiumstange.

Indem das Mastfußgestänge unterhalb der Position der waagrechten Drehachse am Mastfuß befestigt ist, wird eine Kippbewegung des Mastes um die waagrechte Drehachse in eine horizontale Bewegung des Mastfußgestänges (d. h. entlang seiner Längsachse) transformiert.

Das Mastfußgestänge ist an seinem zweiten Endbereich, welcher dem mit dem Mastfuß verbundenen Endbereich gegenüberliegt, in der Art mit einer rotierbar angeordneten Achse verbunden, dass eine horizontal hin- und hergehende Bewegung des Mastfußgestänges in eine rotierende Bewegung der Achse, im Folgenden als "Übertragungswelle" bezeichnet, umgesetzt wird.

Zum Beispiel kann das Mastfußgestänge nach Art einer Pleuelstange drehbar mit einem auf der Übertragungswelle (fest) in deren Endbereich angeordnetem Rad bzw. Schwungrad verbunden sein. Alternativ kann die Übertragungswelle z. B. in Form einer Kurbelwelle ausgebildet sein.

Auch das Schotgestänge ist mit der Übertragungswelle (mittel- oder unmittelbar) beweglich verbunden, wobei diese Verbindung ähnlich zu der Verbindung des Mastfußgestänges mit der Übertragungswelle ausgeführt ist, sodass eine Rotation der Übertragungswelle in einer entlang seiner Längsachse translatorisch hin- und hergehenden Bewegung des Schotgestänges resultiert.

Hierbei ist die Anbindung von Mastfußgestänge und Schotgestänge derart ausgeführt, dass die translatorischen Bewegungen der beiden Gestänge im Falle der Rotation der Übertragungswelle phasenversetzt zueinander ablaufen. In vorteilhafter Weise liegt hierbei der Phasenwinkel in einem Bereich zwischen 40° und 140°, sodass z. B. die maximale Geschwindigkeit der horizontalen Bewegung des Mastfußgestänges im Wesentlichen zeitgleich zu der Horizontalbewegung mit minimaler Geschwindigkeit des Schotgestänges auftritt.

Weiterhin kann die Übertragungswelle mit einer Stromerzeugungseinheit, beispielsweise einem grundsätzlich bekannten Stromgenerator, mittel- (z. B. vermittels eines Getriebes) oder unmittelbar verbunden sein.

Im Betrieb der Anlage trifft der Wind unter einem spitzen Winkel - dem sog. "Anstellwinkel", der bevorzugt 5° bis 30° beträgt - auf die (z. B. konkav gewölbte Luvseite der) Tragfläche auf. Die an der Tragfläche entlang streichende Luft bewirkt - nach den gleichen Prinzipien wie bei einer Tragfläche eines Flugzeugs - eine Kraft, die im Wesentlichen senkrecht zu der flächig ausgebildeten Deckfläche der Tragfläche gerichtet ist. Das Schotgestänge verhindert hierbei eine Drehung der Tragfläche um den Mast, sodass die Windkraft gleichmäßig auf die Tragfläche einwirkt. Indem die Drehbewegung der Tragfläche um den Mast gesperrt ist, wird der Mast als Folge der auf die Tragfläche einwirkenden Kräfte um die Horizontalachse gedreht, d. h. gekippt. Dadurch wird auch die Tragfläche gekippt, wobei jedoch die vom Wind verursachte Auftriebskraft unverändert auf die Tragfläche wirkt.

Indem Tragfläche und Mast vom Wind umgekippt werden, wirkt auf das am Mastfuß befestigte Mastfußgestänge eine horizontal und senkrecht zur Horizontalachse gerichtete Kraft, wodurch das Mastfußgestänge translatorisch entlang seiner Längsachse, d. h. in horizontaler Richtung senkrecht zur Horizontalachse, bewegt wird. Diese horizontale, translatorische Bewegung des Mastfußgestänges wird in eine rotatorische Bewegung, d. h. Drehung, der Übertragungswelle umgesetzt. Diese Drehung wiederum wirkt über das an der Tragfläche befestigte, z. B. als Pleuel ausgeführte, Schotgestänge in der Art, dass das Schotgestänge den Anstellwinkel der Tragfläche verringert, d. h. das Schotgestänge lässt eine Drehung der Tragfläche um den Mast zu, sodass sich die (gekippte) Tragfläche in den Wind dreht. Dadurch wird die durch den Wind auf die Tragfläche ausgeübte Auftriebskraft verringert. Dies wiederum reduziert das am Mast angreifende Drehmoment, welches das Kippen des Mastes um die Horizontalachse bewirkt.

Aufgrund der reduzierten Auftriebskraft bzw. des reduzierten Drehmoments wird daraufhin der Mast, zusammen mit der Tragfläche, von der Mastrückholvorrichtung, z. B. einem Gegengewicht oder einem Federmechanismus, wieder in die lotrechte Ausrichtung gezogen. Das am unteren Ende des Mastes befestigte Mastfußgestänge wird dadurch quasi "mitgezogen" (bzw. schiebt aufgrund der fortwährenden Drehung der Übertragungswelle aktiv mit). Etwas zeitverzögert mit dieser Aufrichtbewegung (d. h. Drehung aus der Kipplage heraus in die Lotrechte) wirkt die rotierende Übertragungswelle vermittels ihrer Anbindung an das Schotgestänge auf dasselbe in der Art, dass die Tragfläche solchermaßen um den Mast gedreht wird, dass der Anstellwinkel wieder zunimmt, d. h. die Tragfläche aus dem Wind gedreht wird. Indem der Anstellwinkel, bevorzugt während nahezu vollendeter Rückstellung des Mastes in die Lotrechte, anwächst, strömt der Wind unter einem größer werdenden Anstellwinkel zur Tragfläche, wodurch die auf die Tragfläche wirkende resultierende Auftriebskraft zunimmt.

Ist der durch die Anlage vorgegebene maximale Anstellwinkel erreicht, so ist ein Zyklus der periodischen Hin- und Herbewegung der Tragfläche abgeschlossen und die Übertragungswelle hat eine komplette Umdrehung (d. h. eine Rotation um 360°) ausgeführt. Nun beginnt der Zyklus von neuem.

Indem diese periodische "Schwingbewegung" der Tragfläche über das Mastfußgestänge in eine Rotationsbewegung der Übertragungswelle umgewandelt wird, ist zum Zwecke der Erzeugung von Strom aus Wind ein herkömmlicher Generator an die Übertragungswelle der erfindungsgemäßen Anlage anschließbar.

Gegenüber Windrädern hat eine solche Windkraftanlage die Vorteile, dass keine kritischen Blattspitzen-Geschwindigkeiten auftreten, und dass pro Quadratmeter Grundfläche wesentlich mehr Flügelflache zur Verfügung stehen kann, da die Tragfläche beliebig groß dimensionierbar ist. Zudem können alle Wartungsarbeiten in Bodennähe durchgeführt werden.

Ein weiterer Vorteil ist die reduzierte Gefährdung von Vögeln, die regelmäßig von den schnell rotierenden Rotorblättern "vom Himmel geholt" werden.

Gemäß einer Ausgestaltung der erfindungsgemäßen Windkraftanlage kann ein Schwungrad in der Art mit der Übertragungswelle verbunden sein, dass eine einmal angestoßene Rotation der Übertragungswelle vermittels des Schwungrades zumindest für die Dauer einer vollständigen Umdrehung (d. h. Rotation um 360°) der Übertragungswelle aufrecht erhalten wird. Das Schwungrad kann als separates, mit der Übertragungswelle verbundenes Bauteil oder als verbindendes Bauteil von Mastfußund/oder Schotgestänge zu der Übertragungswelle ausgeführt sein.

Gemäß einer weiteren Ausgestaltung der erfindungsgemäßen Windkraftanlage kann die Mastrückholvorrichtung entfallen, wobei die notwendige Kraft zum Wiederaufrichten des Mastes in seine lotrechte Ausrichtung aus der im Schwungrad gespeicherten Energie bezogen wird. Das Mastfußgestänge drückt hierbei (aufgrund der fortlaufenden Rotation der Übertragungswelle) aktiv gegen den Mastfuß, sobald der Mast seinen maximalen Kippwinkel bzw. der Anstellwinkel der Tragfläche zum Wind das Minimum erreicht hat.

Die Erfindung kann weiter derart ausgebildet sein, dass eine Mehrzahl von Masten mit jeweils einer daran angeordneten Tragfläche in einer Reihe nebeneinander aufgestellt sind, wobei nur eine Übertragungswelle vorgesehen ist, an der die jeweiligen Mastfuß- und Schotgestänge angreifen. Hierbei sind in vorteilhafter Weise die Schwingbewegungen der einzelnen Masten bzw. Tragflächen zueinander phasenversetzt, wobei der Phasenwinkel der Schwingungen jeweils benachbarter Masten bzw. Tragflächen hierbei z. B. zu 360° / Mastanzahl festgelegt wird.

In vorteilhafter Weise sind die Masten mit den daran angeordneten Tragflächen entlang einer Linie in einem Abstand und einem Winkel der Tragflächen zu der Linie in der Art angeordnet, dass eine laminare Windströmung zwischen benachbarten Tragflächen ermöglicht ist, wobei zusätzlich ein durch die Anordnung der Tragflächen auftretender Venturi-Effekt ausnutzbar ist.

Gemäß einer Ausführungsform ist das Mastfuß- und/oder Schotgestänge mittels einem oder mehrerer Zahnräder (nach dem Prinzip eines Planetenrädergetriebes) mit der Übertragungswelle verbunden.

Diese Ausführungsform eignet sich z. B. zum Herstellen einer Übersetzung, sodass ein Hin- und Herschwingzyklus der Tragfläche in mehreren Umdrehungen der Übertragungswelle resultiert.

Es kann insbesondere vorgesehen sein, dass (außer ggf. dem Mastfuß- und/oder Schotgestänge) Pleuelstangen mit der Übertragungswelle verbunden sind, die die Rotationsbewegung der Übertragungswelle wieder in translatorische Bewegungen umsetzen, wobei diese Pleuelstangen Maschinen oder Werkzeugmaschinen, z. B. eine Sägemaschine, antreiben.

Gemäß einer Ausführungsform ist vorgesehen, dass die erfindungsgemäße Windkraftanlage auf einer drehbaren Plattform aufgestellt ist, wobei diese Plattform entsprechend der Windrichtung derart ausrichtbar ist, das immer ein spitzer Anstellwinkel der Tragfläche, bevorzugt in dem Bereich zwischen 0° und 30°, gewährleistet ist.

Die Plattform kann mit einer Ausrichtungsvorrichtung verbunden sein, die die Plattform bzw. die darauf positionierte Windkraftanlage automatisch in optimaler Weise zur Windrichtung ausrichtet.

Weiterhin kann vorgesehen sein, dass die Windkraftanlage Windleiteinrichtungen, wie z. B. Windleitbleche, aufweist. Mittels dieser Windleiteinrichtungen ist es ermöglicht, laminare Strömungen zu erzeugen, den Venturi-Effekt auszunutzen und/oder den Wind in gewissen Grenzen umzulenken.

Die Windkraftanlage kann derart ausgebildet sein (z. B. mittels entsprechender Steuerungs- und Bremsvorrichtungen), dass die Rotationsgeschwindigkeit der Übertragungswelle steuer- und/oder regelbar ist.

Die Erfindung wird nachfolgend anhand eines Ausführungsbeispiels mit Bezug auf die beiliegenden Figuren veranschaulicht, wobei gleiche oder ähnliche Merkmale mit gleichen Bezugszeichen versehen sind; hierbei zeigen schematisch:
- Figur 1: in Schrägdraufsicht und in Draufsicht eine Ausgestaltung der erfindungsgemäße Windkraftanlage; und
- Figur 2: in Schrägdraufsicht vier Phasen der zyklischen Bewegungsabläufe in der Windkraftanlage.

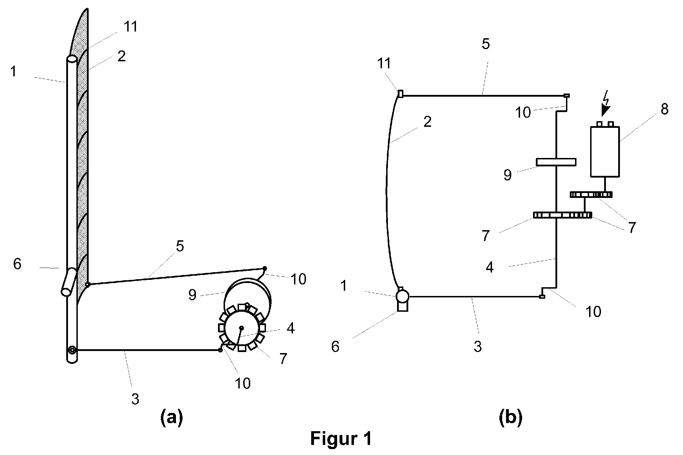

Die Schrägdraufsicht in Figur 1a zeigt den Mast 1, die Tragfläche 2, die aus einer bogenförmig an dem Tragrahmen 11 befestigten Kunststofffolie besteht, das Mastfußgestänge 3, die Übertragungswelle 4 und das Schotgestänge 5. Das Mastfußgestänge 3 und das Schotgestänge 5 sind jeweils über die Kurbel 10 mit der Übertragungswelle 4 verbunden. Der Mast ist an der horizontal ausgerichteten Drehachse 6 drehbar gelagert. Auf der Übertragungswelle 4 sind das Schwungrad 9 und das Zahnrad 7, welches zur Auskopplung der vermittels des Windes erzeugten Rotation dient, angeordnet.

Figur 1b zeigt dieselbe Windkraftanlage in Draufsicht. Hier ist zusätzlich die über die Zahnräder 7 an die Übertragungswelle 4 angekoppelte Rotationsregel- und Stromerzeugungseinheit 8 zu sehen.

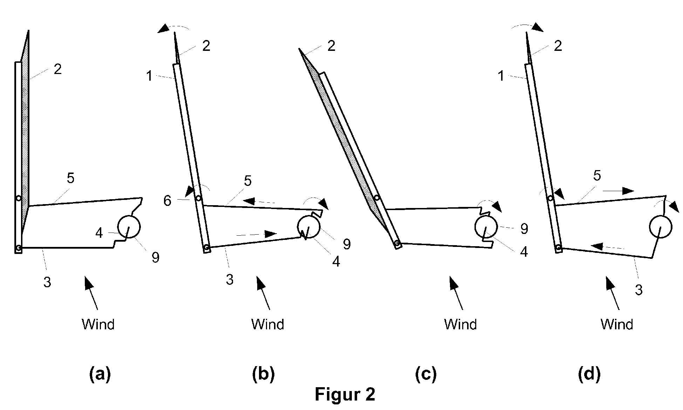

Figur 2a zeigt die Windkraftanlage zu Beginn eines Schwingzykluses; die Tragfläche 2 ist vereinfachend nur als plane Ebene gezeichnet. Der auf die Tragfläche 2 einwirkende Wind ist mittels eines Pfeils dargestellt.

Die Pfeile in Figur 2b veranschaulichen Bewegungen der einzelnen Bauteile. Die durch den Wind an der Tragfläche 2 wirkende Auftriebskraft führt zu einer Kippung des Mastes 1 und der Tragfläche 2 um die Drehachse 6. Dadurch wird das Mastfußgestänge 3 gemäß der Figur 2b nach rechts gedrückt. Diese translatorische Bewegung des Mastfußgestänge 3 wird über die Kurbel 10 in eine Rotationsbewegung der Übertragungswelle 4 umgesetzt, wodurch das mit der Übertragungswelle 4 drehbar verbundene Schotgestänge 5 dem Winddruck nachgibt, d. h. in der Figur nach links bewegt wird. Dies führt zu einer Drehbewegung der Tragfläche 2 um den Mast 1.

Figur 2c zeigt den Zeitpunkt nach einer halben Periode. Die Tragfläche 2 ist aus dem Wind gedreht, sodass keine Kräfte mehr wirken. Die Übertragungswelle 4 bleibt jedoch aufgrund des Schwungrades 9 in Rotation.

Wie Figur 2d zeigt, führt die Rotation der Übertragungswelle 4 dazu, dass das Mastfußgestänge 3 in der Figur nach links und das Schotgestänge 5 nach rechts bewegt werden. Das Schotgestänge 5 zieht die Tragfläche 2 somit wieder unter einem Anstellwinkel in den Wind, während das Mastfußgestänge 3 ein Aufrichten des Mastes 1 zulässt bzw. veranlasst.

Sobald der Mast 1 lotrecht steht, ist ein Zyklus beendet; es ist die Situation von Figur 2a erreicht.

### Liste der verwendeten Bezugszeichen

- 1: Mast
- 2: Tragfläche
- 3: Mastfußgestänge
- 4: Übertragungswelle
- 5: Schotgestänge
- 6: horizontal ausgerichtete Drehachse / Horizontaldrehachse
- 7: Zahnrad
- 8: Rotationsregel- und Stromerzeugungseinheit
- 9: Schwungrad
- 10: Kurbel
- 11: Tragrahmen

## Patentansprüche

1. Windkraftanlage, aufweisend einen lotrecht verlaufenden Mast (1) mit einer daran angeordneten Tragfläche (2), **dadurch gekennzeichnet dass**:
- die Tragfläche (2) im Bereich ihrer ersten Längsseite um eine parallel zum Mast (1) ausgerichtete Drehachse drehbar am Mast (1) angeordnet ist;
- der Mast (1) an einer Position in seinem unteren Bereich einen Drehpunkt aufweist, an welchem er um eine horizontale Drehachse (6) drehbar gelagert ist;
- ein Mastfußgestänge (3) an seinem ersten Endbereich um mindestens zwei rotatorische Freiheitsgrade drehbar mit dem Mast (1) an einer Position unterhalb des Drehpunkts verbunden ist;
- das Mastfußgestänge (3) an seinem zweiten Endbereich in der Art mit einer im Wesentlichen waagrecht ausgerichteten Übertragungswelle (4) verbunden ist, dass eine translatorische Hin- und Herbewegung des Mastfußgestänges (3) in eine Drehbewegung der Übertragungswelle (4) um ihre Längsachse transformierbar ist;
- ein Schotgestänge (5) an seinem ersten Endbereich um mindestens zwei rotatorische Freiheitsgrade drehbar mit der Tragfläche (2) in einem Bereich an der der ersten Längsseite gegenüberliegenden zweiten Längsseite der Tragfläche (2) verbunden ist;
- das Schotgestänge (5) an seinem zweiten Endbereich in der Art mit der Übertragungswelle (4) verbunden ist, dass eine Drehbewegung der Übertragungswelle (4) um ihre Längsachse in eine translatorische Hin- und Herbewegung des Schotgestänges (5) transformierbar ist, wobei das Schotgestänge (5) damit eine Drehbewegung der Tragfläche (2) um den Mast (1) zulässt;
- das Schotgestänge (5) und das Mastfußgestänge (3) in der Art mit der Übertragungswelle (4) verbunden sind, dass die jeweiligen mit der Drehbewegung der Übertragungswelle (4) gekoppelten, periodisch ablaufenden translatorischen Hin- und Herbewegungen um einen vorgegebenen Phasenwinkel zueinander phasenversetzt sind; und
- die Windkraftanlage eine Mastrückholvorrichtung aufweist, mittels derer eine rückstellende Kraft auf den aus der Lotrechten gekippten Mast (1) ausübbar ist.

2. Windkraftanlage nach Anspruch 1, **dadurch gekennzeichnet, dass** die Mastrückholvorrichtung als ein am Mast (1) in seinem unteren Bereich angreifendes Gewicht ausgeführt ist.

3. Windkraftanlage nach Anspruch 1, **dadurch gekennzeichnet, dass** die Mastrückholvorrichtung als ein am Mast (1) angreifendes Federelement ausgeführt ist.

4. Windkraftanlage nach einem der vorstehenden Ansprüche, **dadurch gekennzeichnet, dass** das Schotgestänge (5) und/oder das Mastfußgestänge (3) als Pleuelstange ausgeführt ist.

5. Windkraftanlage nach einem der vorstehenden Ansprüche, **dadurch gekennzeichnet, dass** die Übertragungswelle (4) mit einer Stromerzeugungseinheit (8) verbunden ist.

6. Windkraftanlage nach einem der vorstehenden Ansprüche, **dadurch gekennzeichnet, dass** der Phasenwinkel im Bereich zwischen 40° und 140° liegt.

7. Windkraftanlage nach einem der vorstehenden Ansprüche, **dadurch gekennzeichnet, dass** ein Schwungrad (9) über eine zentral im Schwungrad (9) positionierte Aussparung mit der Übertragungswelle (4) unmittelbar verbunden ist.

8. Windkraftanlage nach einem der vorstehenden Ansprüche, **dadurch gekennzeichnet, dass** eine Mehrzahl von Masten (1) mit jeweils einer daran angeordneten Tragfläche (2) und jeweils einem Mastfußgestänge (3) gleichmäßig beabstandet entlang einer Linie oder eines Kreisbogens aufgestellt ist, wobei die Übertragungswelle (4) als Kurbelwelle ausgebildet und jedes Mastfußgestänge (3) über eine Kurbel (10) mit der Übertragungswelle (4) verbunden ist, wobei die Kurbeln (10) benachbarter Mastfußgestänge (3) jeweils zueinander winkelversetzt an der Übertragungswelle (4) angeordnet sind.

9. Windkraftanlage nach einem der vorstehenden Ansprüche, **dadurch gekennzeichnet, dass** sie mindestens eine Windleiteinrichtung aufweist.
- Hierzu 2 Blatt Zeichnungen -
